# EUROPÄISCHE PATENTSCHRIFT

(11) **EP 1 519 872 B1**
(45) Veröffentlichungstag und Bekanntmachung des Hinweises auf die Patenterteilung: **22.04.2009**
(21) Anmeldenummer: 03763581.0
(22) Anmeldetag: 27.06.2003
(51) Int. Cl.: B63G 13/02

(54) **ELEKTRISCHES ENERGIEVERSORGUNGSSYSTEM FÜR EIN SCHIFF, INSBESONDERE FÜR EIN MIT NIEDRIGER IR-SIGNATUR BETREIBBARES MARINE (NAVY)-SCHIFF**
ELECTRIC ENERGY SUPPLY SYSTEM FOR A SHIP, IN PARTICULAR A NAVY SHIP THAT CAN BE OPERATED WITH A LOW IR SIGNATURE
SYSTEME ELECTRIQUE D'ALIMENTATION EN ENERGIE POUR UN NAVIRE, NOTAMMENT POUR UN NAVIRE DE GUERRE POUVANT FONCTIONNER AVEC UNE SIGNATURE INFRAROUGE FAIBLE

(30) Priorität: 10.07.2002 DE 10231152
(43) Veröffentlichungstag der Anmeldung: 06.04.2005
(73) Patentinhaber: SIEMENS AKTIENGESELLSCHAFT, 80333 München (DE)
(72) Erfinder: RZADKI, Wolfgang, 21509 Glinde (DE); SADLER, Karl-Otto, 22159 Hamburg (DE); SCHULZE HORN, Hannes, 45966 Gladbeck (DE)
(86) Internationale Anmeldenummer: PCT/DE2003/002152
(87) Internationale Veröffentlichungsnummer: WO 2004/007278

(56) Entgegenhaltungen:
- DE-A- 3 825 563
- DE-A- 10 024 657
- DE-A- 19 962 681

## Beschreibung

Die Erfindung betrifft ein elektrisches Energieversorgungssystem für ein Schiff, insbesondere für ein mit niedriger IR-Signatur betreibbares Marine(Navy)-Schiff, das als "All Electric Ship" (AES) ausgebildet ist, mit einem aus Brennstoffzellen gespeisten Gleichstromnetz (DC) als Bordnetz und als Netz für Normalfahrtantriebe und einem Wechselstromnetz (AC) mit Generatoren, insbesondere zur Energieerzeugung für Schnellfahrtantriebe, wobei die Generatoren motorisch angetrieben werden, z.B. durch zumindest eine Gasturbine oder einen, vorzugsweise aufgeladenen, Dieselmotor.

Aus der nicht vorveröffentlichten deutschen Patentanmeldung 101 02 741.9, Anmeldetag: 22.01.2001, ist ein elektrisches Energieversorgungssystem für Wasserfahrzeuge bekannt, das dem vorstehend geschilderten Energieversorgungssystem entspricht. Es ist Aufgabe der Erfindung, eine Ausgestaltung eines entsprechenden elektrischen Energieversorgungssystems für ein Schiff anzugeben, die den besonderen betrieblichen Anforderungen eines Marineschiffs mit speziellen Schnellfahrtantrieben besonders gut entspricht und eine optimale Nutzung aller auf dem Schiff vorhandenen Energieerzeugungseinrichtungen erlaubt.

Den besonderen Anforderungen eines Energieversorgungssystems eines AES wird insbesondere dadurch Rechnung getragen, dass das AC- und DC-Netz derart miteinander verbunden sind, dass zwischen ihnen Elektroenergie ausgetauscht werden kann und dass insbesondere zum Starten der motorischen Antriebe elektrische Energie aus dem DC-Netz entnommen und an das AC-Netz übergeben wird. So kann vorteilhaft ein Startvorgang mit niedriger IR-Signatur der Schnellfahrtantriebe erreicht werden.

In Ausgestaltung der Erfindung ist vorgesehen, dass die Abgase der motorischen Antriebe der Generatoren in einen Unterdruckraum am Schiffsboden eingeführt werden, wobei der Unterdruck in dem Unterdruckraum bei Betrieb des Schnellfahrtantriebes durch das von dem Schnellfahrtantrieb direkt oder indirekt beschleunigte Wasser erzeugt wird. So kann vorteilhaft auf einen Abgasverdichter und/oder Unterdruck erzeugende Aggregate im Zusammenhang mit dem Einführen der Abgase in das Wasser verzichtet werden, obwohl hier ein Druck von bis zu einem bar, über dem atmosphärischen Druck herrscht. Durch die Einführung der Abgase in einen Unterdruckraum am Boden des Schiffes wird dabei vorteilhaft auch eine besonders gute Vermischung der Abgase mit dem den Schiffsboden umströmenden Wasser erreicht, so dass sich, da die Abgasblasen, die gebildet werden, erst hinter dem Heck des Schiffes aufsteigen und hier in den Heckwirbeln untergehen, tatsächlich ein in Bezug auf die Abgase nicht detektierbares Fahren des Schiffes ergibt. Die Abgase werden bei Verwendung einer Gasturbine oder eines Dieselmotors für die Energieversorgung von elektrischen Motoren für Waterjets als Schnellfahrtantriebe in ein koaxiales Abgasdüsensegment der Waterjets eingeführt, wobei die Waterjets für einen Betrieb von bis zu zehn Metern unter der Wasserlinie des Schiffes ausgebildet sind. So wird vorteilhaft von der Ejektor-Wirkung der Waterjets Gebrauch gemacht und gleichzeitig der Drall des Waterjetstrahls ausgenutzt. Insgesamt ergibt sich ein sehr gutes Austragsverhalten der Abgase unter dem Schiffsboden.

Bei der Verwendung von Dieselmotoren für die Energieversorgung von elektrischen Motoren für Propellerantriebe als Schnellfahrtantriebe werden die Abgase vorteilhaft in ein Unterwasserdüsensystem eingeführt, z.B. in ein Venturirohrsystem oder eine ringförmgie Gas-Ausströmdüse. So wird, wenn auch mit einer gewissen Widerstandserhöhung, eine funktionell ähnliche Einführung und Verteilung der Abgase in das Wasser wie bei einem Waterjet mit koaxialem Abgasdüsensegment erreicht. Auch bei Einsatz von Dieselmotoren, die Propellerantriebe mit Energie versorgen, ist also eine Ausführung möglich, die eine Infrarotortung, soweit es die Abgase angeht, ausschließt.

In einer weiteren Ausgestaltung der Erfindung ist vorgesehen, dass für die Abgase der motorischen Antriebe ein Bypass zu einem Austritt oberhalb der Wasserlinie vorgesehen ist, der für den Start der motorischen Antriebe benutzt werden kann. So kann der Start der motorischen Antriebe vorteilhaft auch für den Fall erfolgen, dass eine Unterdruckerzeugung zunächst nicht möglich ist.

Im Rahmen der Erfindung ist weiterhin vorgesehen, dass die Brennstoffzellen für das DC-Netz sowohl schnell in der Leistung steigerbare Brennstoffzellen, z.B. PEM-Zellen, als auch langsamer in der Leistung steigerbare Brennstoffzellen sind, z.B. DMFC- oder SOFC-Zellen oder andere Zellen, die im Temperaturbereich oberhalb der der PEM-Zellen (ca. 80 °C) arbeiten. So lässt sich vorteilhaft eine Grundlastversorgung und eine Spitzenlastversorgung auch für das DC-Netz erreichen, wobei die Kombination unterschiedlicher Brennstoffzellen und Typen eine besonders kostengünstige und wirkungsgradmäßig optimierte Brennstoffzellen-Energieversorgung ermöglicht. Eine derartige Energieversorgung kann sowohl den dynamischen als auch den statischen Anforderungen an die Energieversorgung eines Marine(Navy)-Schiffs vorteilhaft sehr gut nachkommen.

In Ausgestaltung der Erfindung ist dabei vorteilhaft vorgesehen, dass die unterschiedlichen Brennstoffzellen im Medien-(Gas/Wasser) und Wärmeverbund arbeiten und gemeinsam E-Energie in das DC-Netz einspeisen. Gegebenenfalls können sie auch im Verbund mit einem oder mehreren Reformern arbeiten. In jedem Fall ergibt sich ein sehr vorteilhafter hoher Wirkungsgrad mit geringer Wärmeerzeugung, wobei die Restwärme z.B. auch noch zu Kühlzwecken in einem Absorber-Kühlsystem verwendet werden kann. Die Startvorgänge der Schnellfahrtaggregate werden vorteilhaft von den PEM-Zellen vorgenommen, während die Basisbordstromversorgung von den Brennstoffzellen mit höherer Betriebstemperatur übernommen werden. Die Startvorgänge der Schnellfahrtaggregate erfordern viel Energie, da die Aggregate mit Fremdenergie bis zur Mindest-Betriebs-Drehzahl hochgefahren werden müssen, die PEM-Zellen müssen also entsprechend viel Energie liefern können und dementsprechend ausgelegt sein.

Für Marine(Navy)-Schiffe ist es von besonderem Vorteil, wenn die Brennstoffzellen unterschiedlicher Dynamik in technisch zusammenwirkenden Einheiten zusammengefasst werden, die auf unterschiedliche Schiffsbereiche verteilt sind. So ergibt sich eine hohe Unempfindlichkeit gegen Treffer, da auch bei schweren Beschädigungen in einzelnen Schiffsbereichen die Energieerzeugung in den anderen Schiffsbereichen optimiert weitergehen kann.

In Ausgestaltung der Erfindung ist vorteilhaft vorgesehen, dass die Brennstoffzellen eine DC-Schaltanlage mit einem Kontroll- und Leitsystem aufweisen, ebenso die Energieerzeugungseinheiten für die Schnellfahrtantriebe eine AC-Schaltanlage mit einem Kontroll- und Leitsystem. So ist ein bedarfsgerechtes Energiemanagement für die beiden Netze möglich. Beide Netze können völlig unabhängig voneinander gesteuert, geregelt und kontrolliert werden. Auch bei Ausfall eines Netzes bleibt das andere Netz unverändert voll funktionsfähig.

In Ausgestaltung der Erfindung ist fernerhin vorgesehen, dass das AC-Kontroll- und Leitsystem mit Drucksensoren in Verbindung steht, insbesondere mit Unterdrucksensoren in Abgasaustritts-Unterdruckräumen und Drucksensoren in Abgasleitungen sowie, dass es mit Ventil- und Klappenverstelleinrichtungen und ggf. mit Stellungssensoren für Ventile und Klappen in Verbindung steht. So steht eine Basis für eine Automatisierung der Start- und Hochfahrvorgänge der einzelnen Energieerzeuger zur Verfügung, mit deren Hilfe ein Kontroll- und Leitsystem mit einer Abgasführungsschaltlogik (Automatisierungssystem) betrieben werden kann, das die üblichen elektronischen Automatisierungskomponenten, wie Stellgeschwindigkeitsrampen, Verriegelungen etc., aufweist und besonders vorteilhaft auf der Basis von Siemens-SIMATIC S7-Geräten betrieben wird.

Derartige Geräte stehen auch als hoch verfügbare, in sich redundant arbeitende SPS-Geräte zur Verfügung und können vorteilhaft die gesamte Automatisierung übernehmen. In Normal- oder in hochverfügbarer Ausbildung tragen sie in besonderer Weise zur Sicherheit der Automatisierungsvorgänge bei. Ungewollte, das Antriebssystem schädigende, Schaltungszustände können so mit Sicherheit vermieden werden; Öldruck der Lager, Brennstoffdruck und Temperatur, Start- und Zündvorgang etc., d.h. die Startbedingungen, können so sicher eingehalten werden.

Es ist im Rahmen der Erfindung ggf. vorgesehen, dass das Abgasführungssystem ein Drucklufteinspeisesubsystem aufweist, insbesondere zum Ausblasen der Unterdruckräume und/oder zur Strömungsbeschleunigung der Abgase beim Startvorgang. So steht vorteilhafterweise ein Hilfsmittel zur Verbesserung und Beschleunigung der Anfahrvorgänge zur Verfügung. Die Sicherheit des Anfahrvorgangs der zum Erreichen hoher Geschwindigkeiten notwendigen Antriebe ist so erheblich verbesserbar. Falls die Schnellfahrtantriebe durch druckluftgestartete Dieselgeneratorsätze angetrieben werden, kann deren Druckluftreservoir mit verwendet werden.

Es ist weiterhin im Rahmen der Erfindung vorgesehen, dass das Energieversorgungssystem ein den AC- und DC-Schaltanlagen mit ihren Kontroll- und Leitsystemen übergeordnetes Leitsystem aufweist, das die Energieerzeugung und den Energieverbrauch aller Energieerzeuger und -verbraucher aufeinander abstimmt, insbesondere im Hinblick auf die unterschiedliche Dynamik der Energieerzeuger und Verbraucher. So kann vermieden werden, dass, z.B. im Gefecht, weniger Energie für überlebensnotwendige Komponenten des Marine(Navy)-Schiffs zur Verfügung steht, als benötigt wird. In diesem Fall werden z.B. in der betreffenden Situation unwichtige Verbraucher, wie Küche, Klimaanlage etc., vom Bordnetz genommen und die gesamte verfügbare Energie auf die überlebensnotwendigen Aggregate konzentriert.

In Ausgestaltung der Erfindung ist dabei vorgesehen, dass die AC- und DC-Schaltanlagen derart eingerichtet sind, dass bei hoher Energieanforderung im DC-Netz, z.B. bei Einsatz von Hochenergiewaffen, eine maximale Einspeisung von Energie aus dem AC-Netz in das DC-Netz möglich ist. Weiterhin ist in diesem Rahmen auch vorgesehen, dass das DC-Netz hochdynamische Energiespeicher, z.B. Akkubänke oder Schwungradspeicher, aufweist. Diesen Einrichtungen ist gemeinsam, dass bei ihrem Einsatz sprunghaften Anforderungen an die im Bordnetz zur Verfügung zu stellende Energie nachgekommen werden kann. Das AC- und das DC-Netz sind also so eingerichtet, dass E-Energie aus beiden Netzen anforderungsgerecht eingesetzt werden kann.

Die Erfindung kann generell wie folgt beispielhaft beschrieben werden:

Zur Minimierung der IR-Signatur von Überwasser-Marine(Navy)-Schiffen sollen die Abgase von Dieselmotoren und/oder Gasturbinen über koaxiale Abgasdüsensegmente o.ä. in Verbindung mit einem oder mehreren Waterjets bei Ausnutzung des Druckabfallgebiets (Unterdruck = Sog) unterhalb der Wasserlinie als Wasser-Abgasgemisch abgeführt werden. Eine elektrische Schaltungsanordnung ermöglicht es, dass die Waterjets, die von elektrischen Antriebsmotoren angetrieben werden, gestartet werden, bevor die Dieselmotoren und/oder Gasturbinen, die die E-Generatoren für die Erzeugung der elektrischen Energie für die Waterjets antreiben, hochgefahren werden. Die Leistung der Waterjets wird soweit gesteigert, dass in koaxialen Abgasdüsensegmenten o.ä. ein entsprechendes Unterdruckgebiet entsteht. Dann erst werden die Dieselmotoren und/oder Gasturbinen gestartet, wobei die Abgasführung so geschaltet ist, dass die Abgase sofort zum koaxialen Abgasdüsensegment geleitet werden. Nach dem Hochfahren der Dieselmotoren und/oder Gasturbinen übernehmen die Generatoren die Lieferung der elektrischen Leistung für die Waterjetmotoren. Die Waterjets können nun bis zu ihrer maximal möglichen Leistung gesteigert werden. Das gleiche gilt für Hochgeschwindigkeitspropellerantriebe, die anstelle der Waterjets eingesetzt werden können, wobei die koaxialen Abgasdüsensegmente durch axiale Abgasdüsensegmente ersetzt werden.

Die elektrische Schaltungsanordnung ist folgendermaßen gestaltet:

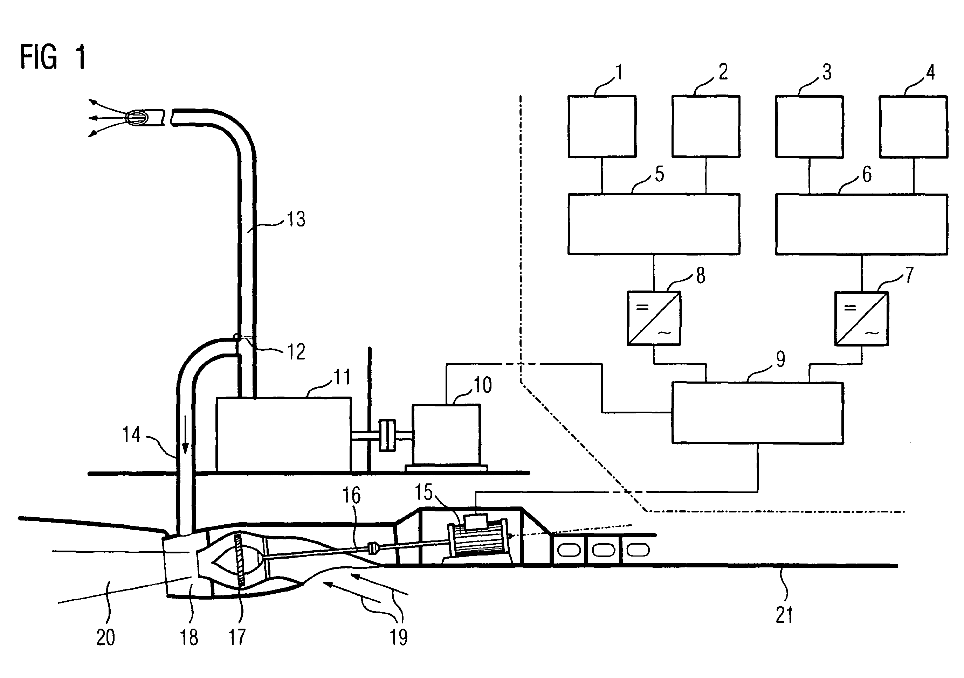

Eine bis n Brennstoffzellenanlagen (BZA), in Figur 1 beispielhaft vier BZA, versorgen emissionslos das Fahr- und Bordnetz mit elektrischer Energie. Die BZA liefern ihre elektrische Energie in Form von Gleichspannung. Im Regelfall versorgen die BZA den Marschfahrtantrieb, in den Zeichnungen beispielhaft eine oder mehrere elektrische Ruderpropellerantriebe, die Waffensysteme und das Bordnetz mit elektrischer Energie. Ein oder mehrere Wechselstromgeneratoren, welche von Dieselmotoren und/oder Gasturbinen angetrieben werden, versorgen die elektrischen Antriebsmotoren der zusätzlichen Antriebe, in den Figuren Waterjets des Schiffes, mit Energie.

Zwischen zumindest einer der DC-Verteilungsschiene und zumindest einer AC-Verteilungsschiene wird bzw. werden ein oder mehrere statische DC/AC-Umformer angeordnet. Über diese Umformer kann die elektrische Energie von der DC-Verteilungsschiene zur AC-Verteilungsschiene und umgekehrt fließen. So können die Waterjets zur IR-Minimierung mit der elektrischen Energie der BZA gestartet werden. Weiterhin kann im Notfall, etwa bei Ausfall der BZA, von den AC-Generatoren, die von Dieselmotoren und/oder Gasturbinen angetrieben werden, das DC-Netz mit elektrischer Energie versorgt werden; in diesem Fall allerdings ggf. ohne IR-Signaturminimierung.

Bei Änderung des Betriebszustandes des Schiffes von Waterjetantrieben auf Marschfahrtantriebe wird im IR-signaturminimiertem Betrieb umgekehrt verfahren. Die Leistung der Waterjets wird soweit zurückgenommen, dass im koaxialen Abgasdüsensegment noch genügend Unterdruck zum Absaugen/Abführen der Abgase der Dieselmotoren und/oder Gasturbinen vorhanden ist. Die DC/AC-Umformer werden aktiviert und die elektrische Energielieferung an die bzw. den Waterjet wird von den BZA übernommen. Die Leistung der Wechselstromgeneratoren wird auf Null heruntergefahren und von der AC-Verteilerschiene getrennt. Danach werden die Dieselmotoren und/oder Gasturbinen heruntergefahren und abgeschaltet. Nun können die Waterjets ebenfalls in ihrer Leistung auf Null gefahren und abgeschaltet werden.

So wird die IR-Signatur von Überwasser-Marine(Navy)-Schiffen auch in den Zu- und Abschaltphasen von Schnellfahrtantrieben minimiert. Somit ist das in erfindungsgemäßer Weise ausgerüstete Schiff sowohl bei Marschfahrt mit Brennstoffzellenantrieb als auch in den Übergangsphasen zur Höchstfahrt bzw. von der Höchstfahrt wieder herunter auf Marschfahrt und bei Höchstfahrt, durch IR-Sensoren aus größerer Entfernung nicht ortbar.

Die Erfindung wird anhand von Zeichnungen näher erläutert, aus denen, ebenso wie aus den Unteransprüchen, auch erfinderische Einzelheiten entnehmbar sind.

Im einzelnen zeigen:
- FIGUR 1: ein Antriebssystem mit geringer IR-Signatur für ein Marine(Navy)-Überwasserschiff im Prinzip mit System-Teilausschnitten und
- FIGUR 2: das Prinzip des Energieversorgungssystems.

In FIGUR 1 bezeichnen 1, 2, 3 und 4 je eine Brennstoffzelleneinheit, die wahlweise aus einem PEM-Zellenblock oder aus einer Kombination eines PEM-Zellenblocks mit einer anderen Brennstoffzelle mit höherer Betriebstemperatur bestehen kann. Bei einer Kombination wird ein Funktionsverbund der beiden unterschiedlichen Brennstoffzellen hergestellt. Die von den Brennstoffzellenanlagen 1, 2, 3 und 4 erzeugte elektrische Energie gelangt in elektrische DC-Schaltanlagen 5, 6, die ggf. auch zusammengefasst werden können, wobei je nach Sicherheits- und Redundanzanforderungen auch mehr als zwei DC-Schaltanlagen (E-Werke) angeordnet werden, und von hier aus über DC/AC-Umformer 7, 8 zu der elektrischen Schaltanlage 9, einer AC-Schaltanlage. Von der elektrischen Schaltanlage 9 wird sowohl der Generator 10 als auch der Elektromotor 15 des Waterjets 17 geschaltet. Der Generator 10 steht mit der Gasturbine 11 in Verbindung, deren Abgase wahlweise - über die Umschalteinrichtung 12 schaltbar, durch die Abgasleitung 13 - in Sonderfällen - in die Atmosphäre geleitet wird oder im Normalfall über die Abgasleitung 14 zu dem koaxialen Abgasdüsensegment 18 des Waterjets 17. Zwischen dem Elektromotor 15 und dem Waterjet 17 ist eine Antriebswelle 16 angeordnet. Der Wassereintritt in den Waterjet 17 erfolgt wie durch die Pfeile 19 angedeutet und das Wasser verlässt im Wasserabgaskegel 20, wie angedeutet, den Waterjet 17. Die Schiffsunterkante ist mit 21 bezeichnet. Wie ersichtlich, befindet sich der Waterjet erheblich unterhalb der Wasserlinie, in der Regel zwischen 5 und 12 m. Entsprechend ist der zu überwindende Wasserdruck.

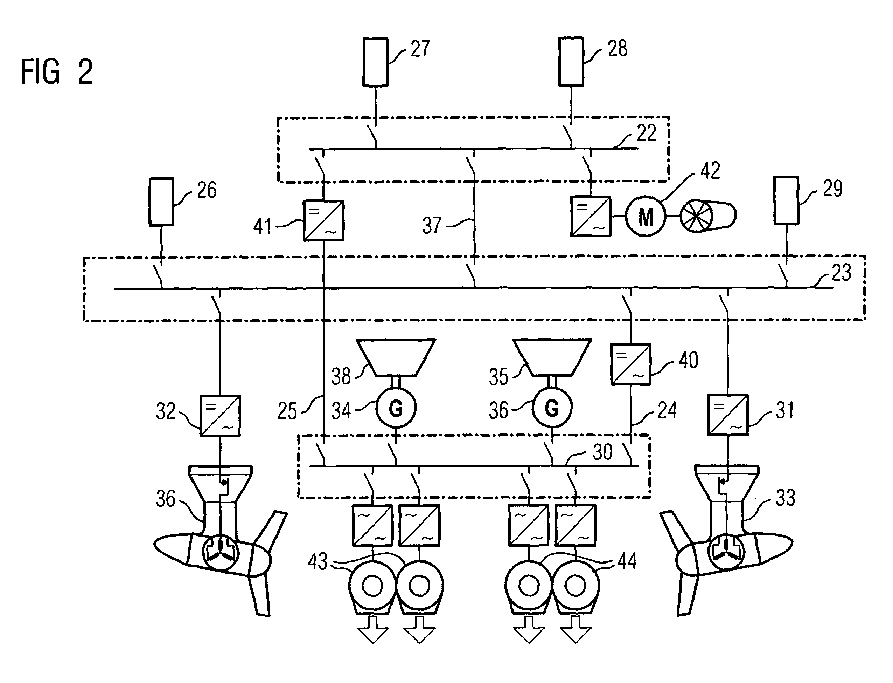

In FIGUR 2 bezeichnen 22 und 23 je eine Gleichstromschiene, die sich zwischen den Brennstoffzellenaggregaten 26, 27, 28 und 29 erstrecken. Die Energie aus den Gleichstromschienen 22, 23 werden über Verbindungsleitungen 24, 25 mit Stromrichtern 40, 41 an die Wechselstromschiene 30 übergeben. An der Gleichstromschiene 23 hängt, über einen Wechselrichter 31 mit Energie versorgt ein beispielhaft eingezeichneter Ruderpropeller 33, sowie ebenfalls über den Wechselrichter 32 mit Energie versorgt, ein anderer beispielhaft eingezeichneter Ruderpropeller 36. Anstelle der Ruderpropeller können natürlich auch normale Propellerantriebe verwendet werden.

Die Wechselstromschiene 30 wird durch die Generatoren 34, 36, diese angetrieben durch Gasturbinen 35, 38, mit Energie versorgt. Aus der Wechselstromschiene 30 werden die Waterjetpaare 34, 35 mit Energie versorgt. Zwischen den einzelnen Stromschienen, wie sie in FIGUR 2 beispielhaft gezeigt, und ihren Teilen befinden sich die üblichen und nur angedeutet dargestellten Schalteinrichtungen. An der Gleichstromschiene 22 ist noch ein Bow Thruster 42 angeschlossen, der wegen seiner geringen Leistung und seines seltenen Einsatzes aus dem Gleichstromnetz gespeist werden kann. Die Gleichstromschienen 22, 23 sind durch eine Überleitung 37 miteinander verbunden, so dass sich insgesamt ein komplettes Bordnetz ergibt, wobei die FIGUR 2 nur die wesentlichen Komponenten zeigt.

## Patentansprüche

1. Elektrisches Energieversorgungssystem für ein Schiff, insbesondere für ein mit niedriger IR-Signatur betreibbares Marine(Navy)-Schiff, das als "All Electric Ship" (AES) ausgebildet ist, mit einem aus Brennstoffzellen (1,2,3,4) gespeisten Gleichstromnetz (DC) als Bordnetz und als Netz für Normalfahrantriebe und einem Wechselstromnetz (AC) mit Generatoren (10), insbesondere zur Energieerzeugung für Schnellfahrtantriebe, wobei die Generatoren (10) motorisch angetrieben werden, z.B. durch zumindest eine Gasturbine (11) oder einen, vorzugsweise aufgeladenen, Dieselmotor,
**dadurch gekennzeichnet, dass** das AC- und DC-Netz derart miteinander verbunden sind, dass zwischen ihnen Elektroenergie ausgetauscht werden kann, und dass insbesondere zum Starten der motorischen Antriebe elektrische Energie aus dem DC-Netz entnommen und an das AC-Netz übergeben wird.

2. Elektrisches Energieversorgungssystem nach Anspruch 1,
**dadurch gekennzeichnet, dass** die Abgase der motorischen Antriebe der Generatoren (10) in einen Unterdruckraum am Schiffsboden eingeführt werden, wobei der Unterdruck in dem Unterdruckraum bei Betrieb des Schnellfahrtantriebs durch das von dem Schnellfahrtantrieb direkt oder indirekt beschleunigte Wasser erzeugt wird.

3. Elektrisches Energieversorgungssystem nach Anspruch 1 oder 2, **dadurch gekennzeichnet, dass** die Abgase bei Verwendung einer Gasturbine (11) oder eines Dieselmotors für die Energieversorgung von elektrischen Motoren (15) für Waterjets (17) als Schnellfahrtantriebe in koaxiale Abgasdüsensegmente (18) der Waterjets (17) eingeführt werden, wobei die Waterjets (17) für einen Betrieb von bis zu zehn Metern unter der Wasserlinie des Schiffes ausgebildet sind.

4. Elektrisches Energieversorgungssystem nach Anspruch 1 oder 2, **dadurch gekennzeichnet, dass** die Abgase bei Verwendung von Dieselmotoren für die Energieversorgung von elektrischen Motoren (15) für Propellerantriebe(36) als Schnellfahrtantriebe in ein Unterwasserdüsensystem eingeführt werden, z.B. in ein Venturirohrsystem oder eine ringförmige Gas-Ausstromdüse.

5. Elektrisches Energieversorgungssystem nach Anspruch 1, 2, 3 oder 4, **dadurch gekennzeichnet, dass** für die Abgase der motorischen Antriebe ein Bypass zu einem Austritt oberhalb der Wasserlinie vorgesehen ist, der für den Start der motorischen Antriebe benutzt werden kann.

6. Elektrisches Energieversorgungssystem mit einem AC- und einem DC-Netz für ein AES nach einem oder mehreren der vorhergehenden Ansprüche, **dadurch gekennzeichnet, dass** die Brennstoffzellen (1,2,3,4) für das DC-Netz sowohl schnell in der Leistung steuerbare Brennstoffzellen, z.B. PEM-Zellen, als auch langsamer in der Leistung steigerbare Brennstoffzellen sind, z.B. DMFC- oder SOFC-Zellen oder andere Zellen, die im Temperaturbereich oberhalb der PEM-Zellen (ca. 80 Grad C) arbeiten.

7. Elektrisches Energieversorgungssystem nach Anspruch 6, **dadurch gekennzeichnet, dass** die unterschiedlichen Brennstoffzellen (1,2,3,4) im Medien- (Gas/Wasser) und Wärmeverbund arbeiten und gemeinsam E-Energie in das DC-Netz einspeisen.

8. Elektrisches Energieversorgungssystem nach Anspruch 6 oder 7, **dadurch gekennzeichnet, dass** die Kapazität der schnell in der Leistung steigerbaren Brennstoffzellen derart bemessen ist, dass zumindest die Startvorgänge der Schnellfahrtantriebe vorgenommen werden können.

9. Elektrisches Energieversorgungssystem nach einem oder mehreren der Ansprüche 6 bis 8, **dadurch gekennzeichnet, dass** Brennstoffzellen (1,2,3,4) unterschiedlicher Dynamik in technisch zusammenwirkenden Einheiten zusammengefasst und auf unterschiedliche Schiffsbereiche verteilt sind.

10. Elektrisches Energieversorgungssystem nach einem oder mehreren der vorhergehenden Ansprüche, **dadurch gekennzeichnet, dass** die Brennstoffzellen (1,2,3,4) eine DC-Schaltanlage (5,6) mit einem Kontroll- und Leitsystem aufweisen.

11. Elektrisches Energieversorgungssystem nach einem oder mehreren der vorhergehenden Ansprüche, **dadurch gekennzeichnet, dass** die Energieerzeugungseinheiten (10) für die Schnellfahrtantriebe eine AC-Schaltanlage (9) mit einem Kontroll- und Leitsystem aufweisen.

12. Elektrisches Energieversorgungssystem nach Anspruch 10 oder 11, **dadurch gekennzeichnet, dass** es mit einem Abgasführungssystem in Verbindung steht, mit dem eine Umschaltung der Abgasführung möglich ist.

13. Elektrisches Energieversorgungssystem nach einem oder mehreren der vorhergehenden Ansprüche, **dadurch gekennzeichnet, dass** das AC-Kontroll- und Leitsystem mit Drucksensoren in Verbindung steht, insbesondere mit Unterdrucksensoren in Abgasaustritts-Unterdruckräumen und Drucksensoren in Abgasleitungen (14).

14. Elektrisches Energieversorgungssystem nach einem oder mehreren der vorhergehenden Ansprüche, **dadurch gekennzeichnet, dass** das AC-Kontroll- und Leitsystem mit Ventil- und Klappenverstelleinrichtungen und ggf. mit Stellungssensoren in Verbindung steht.

15. Elektrisches Energieversorgungssystem nach einem oder mehreren der vorhergehenden Ansprüche, **dadurch gekennzeichnet, dass** das AC-Kontroll- und Leitsystem eine Abgasführungs-Schaltlogik (Automatisierungssystem) aufweist, insbesondere mit Stellgeschwindigkeitsrampen und Verriegelungen, insbesondere auf der Basis von Siemens-SIMATIC S7-Geräten, und dass ein auf der gleichen Technik aufbauendes Automatisierungssystem für die Antriebe vorgesehen ist.

16. Elektrisches Energieversorgungssystem nach einem oder mehreren der vorhergehenden Ansprüche, **dadurch gekennzeichnet, dass** das Abgasführungssystem ein Drucklufteinspeisesubsystem, insbesondere zum Ausblasen der Unterdruckräume und/oder zur Strömungsbeschleunigung der Abgase beim Startvorgang aufweist.

17. Elektrisches Energieversorgungssystem nach einem oder mehreren der vorhergehenden Ansprüche, **dadurch gekennzeichnet, dass** es ein den AC- und DC-Schaltanlagen (9 bzw. 5,6) mit ihrem jeweiligen Kontroll- und Leitsystem übergeordnetes Leitsystem aufweist, das die Energieerzeugung und den Energieverbrauch aller Energieerzeuger und Verbraucher aufeinander abstimmt, insbesondere im Hinblick auf die unterschiedliche Dynamik der Energieerzeuger und Verbraucher.

18. Elektrisches Energieversorgungssystem nach Anspruch 17, **dadurch gekennzeichnet, dass** die AC- und DC-Schaltanlagen (9 bzw. 5,6) derart eingerichtet sind, dass bei hoher Energieanforderung im DC-Netz, z.B. bei Einsatz von Hochenergiewaffen, eine maximale Einspeisung von Energie aus dem AC-Netz in das DC-Netz möglich ist.

19. Elektrisches Energieversorgungssystem nach Anspruch 17 oder 18, **dadurch gekennzeichnet, dass** die AC- und DC-Komponenten, insbesondere die Schaltanlagen (5,6,9), derart eingerichtet sind, dass das DC-Netz dauerhaft aus dem AC-Netz mit Energie versorgt werden kann, wenn die Brennstoffzellen (1,2,3,4) gänzlich oder teilweise zur Energieerzeugung ausfallen.

20. Elektrisches Energieversorgungssystem nach einem oder mehreren der vorhergehenden Ansprüche, **dadurch gekennzeichnet, dass** das DC-Netz hochdynamische Energiespeicher, z.B. Akkubänke oder Schwungradspeicher, aufweist.

## Claims

1. Electrical power supply system for a ship, in particular for a navy ship which can be operated with a low IR signature, which is in the form of an "All Electric Ship" (AES) having a DC power supply (DC), which is fed from fuel cells (1,2,3,4), as the ship power supply system and as a power supply system for normal speed propulsion systems, and having an AC power supply system (AC) with generators (10), in particular for supplying power for high-speed propulsion systems, with the generators (10) being motor-driven, for example by at least one gas turbine (11) or a diesel engine, preferably a supercharged diesel engine, **characterized in that** the AC and DC power supply systems are connected to one another such that electrical power can be interchanged between them, and **in that** electrical power is drawn from the DC power supply system and transferred to the AC power supply system in particular for starting the engine drives.

2. Electrical power supply system according to Claim 1, **characterized in that** the exhaust gases from the engine drives for the generators (10) are introduced into a reduced-pressure area at the base of the ship, with reduced pressure in the reduced pressure area being produced during operation of the high-speed propulsion system by the water which is accelerated directly or indirectly by the high-speed propulsion system.

3. Electrical power supply system according to Claim 1 or 2, **characterized in that** the exhaust gases when using a gas turbine (11) or a diesel engine are introduced into coaxial exhaust-gas nozzle segments (18) of the water jets (17) for supplying power to electric motors (15) for water jets (17) as the high-speed propulsion systems, with the water jets (17) being designed to operate at up to ten meters below the waterline of the ship.

4. Electrical power supply system according to Claim 1 or 2, **characterized in that** the exhaust gases when using diesel engines for the power supply for electric motors (15) for propeller propulsion systems (36) as high-speed propulsion systems are introduced into an underwater nozzle system, for example into a Venturi tube system or into an annular gas outlet nozzle.

5. Electrical power supply system according to Claim 1, 2, 3 or 4, **characterized in that** a bypass is provided for the exhaust gases from the engine drives to an outlet above the waterline, which may be used for starting the engine drives.

6. Electrical power supply system having an AC and DC power supply system for an AES, according to one or more of the preceding claims, **characterized in that** the fuel cells (1,2,3,4) for the DC power supply system are not only fuel cells whose power can be controlled quickly, for example PEM cells, but also fuel cells whose power can be increased more slowly, for example DMFC or SOFC cells or other cells which operate in the temperature range above the PEM cells (approximately 80 degrees C).

7. Electrical power supply system according to Claim 6, **characterized in that** the different fuel cells (1,2,3,4) operate in the media (gas/water) and heat combination, and jointly feed electrical power into the DC power supply system.

8. Electrical power supply system according to Claim 6 or 7, **characterized in that** the capacity of the fuel cells whose power can be increased quickly is designed such that at least the starting processes of the high-speed propulsion systems can be carried out.

9. Electrical power supply system according to one or more of Claims 6 to 8, **characterized in that** fuel cells (1,2,3,4) with a different dynamic response are combined to form technically interacting units, and are distributed between different ship areas.

10. Electrical power supply system according to one or more of the preceding claims, **characterized in that** the fuel cells (1,2,3,4) have a DC switching system (5,6) with a monitoring and control system.

11. Electrical power supply system according to one or more of the preceding claims, **characterized in that** the power generation units (10) for the high-speed propulsion systems have an AC switching system (9) with a monitoring and control system.

12. Electrical power supply system according to Claim 10 or 11, **characterized in that** the system is connected to an exhaust gas supply system, which allows switching of the exhaust gas supply.

13. Electrical power supply system according to one or more of the preceding claims, **characterized in that** the AC monitoring and control system is connected to pressure sensors, in particular to reduced-pressure sensors in exhaust gas outlet reduced-pressure areas, and to pressure sensors in exhaust gas lines (14).

14. Electrical power supply system according to one or more of the preceding claims, **characterized in that** the AC monitoring and control system is connected to valve and flap control devices and, possibly, to position sensors.

15. Electrical power supply system according to one or more of the preceding claims, **characterized in that** the AC monitoring and control system has an exhaust gas supply switching logic (automation system), in particular with actuating rate ramps and interlocks, in particular based on Siemens SIMATIC S7 appliances, and **in that** an automation system based on the same technology provided for the propulsion systems.

16. Electrical power supply system according to one or more of the preceding claims, **characterized in that** the exhaust gas supply system has a compressed-air feed subsystem, in particular for blowing out the reduced-pressure areas and/or for acceleration of the flow of the exhaust gases during the starting process.

17. Electrical power supply system according to one or more of the preceding claims, **characterized in that** the system has a control system which operates at a higher level than the AC and DC switching systems (9 or 5,6) with their respective monitoring and control system, which higher-level control system matches the power generation and the power consumption of all the power generators and loads to one another, in particular with respect to the different dynamic responses of the power generators and loads.

18. Electrical power supply system according to Claim 17, **characterized in that** the AC and DC switching systems (9 or 5,6) are designed such that a maximum amount of power can be fed from the AC power supply system to the DC power supply system when the power demand in the DC power supply system is high, for example when using high-energy weapons.

19. Electrical power supply system according to Claim 17 or 18, **characterized in that** the AC and DC components, in particular the switching systems (5,6,9), are designed such that the DC power supply system can be supplied with power continuously from the AC power supply system when the fuel cells (1,2,3,4) for power generation fail entirely or partially.

20. Electrical power supply system according to one or more of the preceding claims, **characterized in that** the DC power supply system has high-dynamic-response energy stores, for example rechargeable battery banks or flywheel energy stores.

## Revendications

1. Système électrique d'alimentation en énergie pour un navire, notamment pour un navire de guerre (Navy) pouvant fonctionner avec une IR-Signatur basse, qui est constitué en « bateau tout électrique » (AES) comprenant un réseau (DC) en courant continu alimenté par des piles (1, 2, 3, 4) à combustible comme réseau de bord et comme réseau pour des entraînements de propulsion normale et un réseau (AC) en courant alternatif ayant des génératrices, notamment pour la production d'énergie pour des entraînements à vive allure, les génératrices (10) étant entraînées par moteur, par exemple par au moins une turbine (11) à gaz ou par un moteur diesel, de préférence suralimenté,
**caractérisé en ce que** le réseau AC et le réseau DC sont reliés entre eux de façon à pouvoir échanger de l'énergie électrique entre eux et **en ce que**, notamment pour le démarrage des entraînements motorisés, de l'énergie électrique est prélevée du réseau DC et est cédée au réseau AC.

2. Système électrique d'alimentation en énergie suivant la revendication 1, dans lequel les gaz d'échappement des entraînements motorisés des génératrices (10) sont envoyés dans une chambre de dépression dans la cale, la dépression dans la chambre de dépression étant produite, lors du fonctionnement de l'entraînement à vive allure, par l'eau accélérée directement ou indirectement par l'entraînement à vive allure.

3. Système électrique d'alimentation en énergie suivant la revendication 1 ou 2, **caractérisé en ce que** les gaz d'échappement sont, lors de l'utilisation d'une turbine (11) à gaz ou d'un moteur diesel pour l'alimentation en énergie de moteur (15) électrique pour des hydrojets (17) comme entraînements à vive allure, introduits dans des segments (18) coaxiaux de buse de gaz d'échappement des hydrojets (17), les hydrojets (17) étant constitués pour un fonctionnement allant jusqu'à dix mètres en dessous de la ligne de flottaison du navire.

4. Système électrique d'alimentation en énergie suivant la revendication 1 ou 2, **caractérisé en ce que** les gaz d'échappement sont, lors de l'utilisation de moteurs diesels pour l'alimentation en énergie de moteurs (15) électriques pour des entraînements (36) de propulsion comme entraînements à vive allure, introduits dans un système de buses sous l'eau, par exemple dans un système de tube Venturi ou dans des buses de sortie de gaz de forme annulaire.

5. Système électrique d'alimentation en énergie suivant la revendication 1, 2, 3 ou 4, **caractérisé en ce qu'**il est prévu, pour les gaz d'échappement des entraînements motorisés, une dérivation vers une sortie au dessus de la ligne de flottaison, qui peut être utilisée pour le démarrage des entraînements motorisés.

6. Système électrique d'alimentation en énergie ayant un réseau AC et un réseau DC pour un AES suivant l'une ou plusieurs des revendications précédentes, **caractérisé en ce que** les piles (1, 2, 3, 4) à combustible pour le réseau DC sont tant des piles à combustible pouvant être commandées rapidement en puissance, par exemple des piles PEM, qu'également des piles à combustible pouvant augmenter lentement en puissance, par exemple des piles DMFC ou des piles SOFC ou d'autres piles qui fonctionnent dans la plage de température au dessus de celles des piles PEM (environ 80° C).

7. Système électrique d'alimentation en énergie suivant la revendication 6, **caractérisé en ce que** les piles (1, 2, 3, 4) à combustible différentes fonctionnent dans des compositions de milieux (gaz/eau) et de chaleur et injectent en commun de l'énergie E dans le réseau DC.

8. Système électrique d'alimentation en énergie suivant la revendication 6 ou 7, **caractérisé en ce que** la capacité des piles à combustible pouvant augmenter rapidement en puissance est mesurée de façon à pouvoir effectuer au moins les opérations de démarrage des entraînements à vive allure.

9. Système électrique d'alimentation en énergie suivant l'une ou plusieurs des revendications 6 à 8, **caractérisé en ce que** des piles (1, 2, 3, 4) à combustible de dynamiques différentes sont rassemblées dans des unités coopérantes techniquement et sont réparties sur des parties différentes du navire.

10. Système électrique d'alimentation en énergie suivant l'une ou plusieurs des revendications précédentes, **caractérisé en ce que** les piles (1, 2, 3, 4) à combustible comportent une installation (5, 6) de commutation DC, ayant un système de contrôle et de conduite.

11. Système électrique d'alimentation en énergie suivant l'une ou plusieurs des revendications précédentes, **caractérisé en ce que** les unités (10) de production d'énergie ont, pour les entraînements à vive allure, une installation (9) de commutation AC, ayant des systèmes de contrôle et de conduite.

12. Système électrique d'alimentation en énergie suivant la revendication 10 ou 11, **caractérisé en ce qu'**il est en liaison avec un système d'évacuation des gaz d'échappement, par lequel une inversion de la conduite des gaz d'échappement est possible.

13. Système électrique d'alimentation en énergie suivant l'une ou plusieurs des revendications précédentes, **caractérisé en ce que** le système de contrôle et de conduite AC est en liaison avec des capteurs de pression, notamment avec des capteurs de dépression dans des chambres en dépression de sortie des gaz d'échappement et avec des capteurs de pression dans des conduits (14) pour les gaz d'échappement.

14. Système électrique d'alimentation en énergie suivant l'une ou plusieurs des revendications précédentes, **caractérisé en ce que** le système de contrôle et de conduite AC est en liaison avec des dispositifs de réglage de vanne et de volet et le cas échéant avec des capteurs de position.

15. Système électrique d'alimentation en énergie suivant l'une ou plusieurs des revendications précédentes, **caractérisé en ce que** le système de commande et de conduite AC comportent une logique de commutation de conduite des gaz d'échappement (système d'automatisation), ayant notamment des rampes de vitesse de réglage et des verrouillages, notamment à base d'appareils SIMATIC S7 Siemens, et **en ce qu'**il est prévu, pour les entraînements, un système d'automatisation constitué suivant la même technique.

16. Système électrique d'alimentation en énergie suivant l'une ou plusieurs des revendications précédentes, **caractérisé en ce que** le système de conduite des gaz d'échappement comporte un sous-système d'injection d'air comprimé, notamment pour purger les chambres en dépression et/ou pour accélérer le courant des gaz d'échappement lors de l'opération de démarrage.

17. Système électrique d'alimentation en énergie suivant l'une ou plusieurs des revendications précédentes, **caractérisé en ce qu'**il a un système de conduite superposé aux installations (9 et 5, 6) de commutation AC et DC ayant son système respectif de contrôle et de conduite, qui adapte la production d'énergie à la consommation d'énergie de tous les producteurs et consommateurs d'énergie entre eux, notamment en ce qui concerne la dynamique différente des producteurs et consommateurs d'énergie.

18. Système électrique d'alimentation en énergie suivant la revendication 17, **caractérisé en ce que** les installations (9 et 5, 6) de commutation AC et DC sont telles que, lorsque l'on demande beaucoup d'énergie dans le réseau DC, par exemple lors de l'utilisation d'armes demandant beaucoup d'énergie, une injection maximum d'énergie à partir du réseau AC au réseau DC est possible.

19. Système électrique d'alimentation en énergie suivant la revendication 17 ou 18, **caractérisé en ce que** les composants AC et DC, notamment les installations (5, 6, 9) de commutation, sont tels que le réseau DC peut être alimenté de manière durable en énergie à partir du réseau AC lorsque les piles (1, 2, 3, 4) à combustible sont défaillantes en tout ou partie pour produire de l'énergie.

20. Système électrique d'alimentation en énergie suivant l'une ou plusieurs des revendications précédentes, **caractérisé en ce que** le réseau DC a un accumulateur d'énergie très dynamique, par exemple des batteries d'accumulateurs ou des accumulateurs à volant.
